(19) Europäisches Patentamt
European Patent Office
Office européen des brevets

(11) **EP 3 414 139 B1**

(12) **EUROPÄISCHE PATENTSCHRIFT**

(45) Veröffentlichungstag und Bekanntmachung des Hinweises auf die Patenterteilung:
**27.09.2023   Patentblatt 2023/39**

(21) Anmeldenummer: **16816265.9**

(22) Anmeldetag: **16.12.2016**

(51) Internationale Patentklassifikation (IPC):
**B60W 50/00** (2006.01)   **B60W 50/06** (2006.01)
**B60W 30/09** (2012.01)   **B60W 30/095** (2012.01)

(52) Gemeinsame Patentklassifikation (CPC):
**B60W 30/09; B60W 30/0953; B60W 30/0956; B62D 15/0265; G08G 1/163; B60W 2050/0004; B60W 2050/065; B60W 2556/65; B60W 2756/10**

(86) Internationale Anmeldenummer:
**PCT/EP2016/081471**

(87) Internationale Veröffentlichungsnummer:
**WO 2017/137124 (17.08.2017 Gazette 2017/33)**

(54) **KRAFTFAHRZEUG-STEUERVORRICHTUNG UND VERFAHREN ZUM ERMITTELN VON AUSWEICHTRAJEKTORIEN FÜR EIN KOLLISIONSFREIES AUSWEICHMANÖVER MEHRERER KRAFTFAHRZEUGE**

MOTOR VEHICLE CONTROL DEVICE AND METHOD FOR DETERMINING AVOIDANCE TRAJECTORIES FOR A COLLISION-FREE AVOIDANCE MANOEUVRE OF MULTIPLE MOTOR VEHICLES

DISPOSITIF DE COMMANDE DE VÉHICULE AUTOMOBILE ET PROCÉDÉ DE DÉTERMINATION DE TRAJECTOIRES D'ÉVITEMENT POUR UNE MANOEUVRE D'ÉVITEMENT SANS COLLISION DE PLUSIEURS VÉHICULES AUTOMOBILES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.02.2016   DE 102016202070**

(43) Veröffentlichungstag der Anmeldung:
**19.12.2018   Patentblatt 2018/51**

(73) Patentinhaber: **Volkswagen Aktiengesellschaft 38440 Wolfsburg (DE)**

(72) Erfinder:
• **DÜRING, Michael 38106 Braunschweig (DE)**
• **NIETZSCHMANN, Clemens 01259 Dresden (DE)**

(56) Entgegenhaltungen:
**DE-A1-102010 033 776    DE-A1-102012 005 272**

• **DURING MICHAEL ET AL: "Adaptive cooperative maneuver planning algorithm for conflict resolution in diverse traffic situations", 2014 INTERNATIONAL CONFERENCE ON CONNECTED VEHICLES AND EXPO (ICCVE), IEEE, 3. November 2014 (2014-11-03), Seiten 242-249, XP032794471, DOI: 10.1109/ICCVE.2014.7297550 [gefunden am 2015-10-12]**
• **Chrisoph Hermes: "Aktionserkennung und -prädiktion mittels Trajektorienklassifikation - Dissertationsschrift", , 30. August 2012 (2012-08-30), Seiten 1-144, XP055349148, Internet Gefunden im Internet: URL:https://pub.uni-bielefeld.de/download/ 2610373/2610374 [gefunden am 2017-02-23]**

- BRANICKY M S ET AL: "Path and trajectory diversity: Theory and algorithms", 2008 IEEE INTERNATIONAL CONFERENCE ON ROBOTICS AND AUTOMATION. THE HALF-DAY WORKSHOP ON: TOWARDS AUTONOMOUS AGRICULTURE OF TOMORROW, IEEE - PISCATAWAY, NJ, USA, PISCATAWAY, NJ, USA, 19. Mai 2008 (2008-05-19), Seiten 1359-1364, XP031340336, ISBN: 978-1-4244-1646-2
- Tan Pang-Ning ET AL: "Introduction to Data Mining (First Edition), Chapter 8, Cluster Analysis: Basic Concepts and Algorithms", Introduction to Data Mining (First Edition), 25 March 2006 (2006-03-25), pages 487-568, XP055867972, https://www-users.cse.umn.edu/~kumar001/dm book/ch8.pdf Retrieved from the Internet: URL:https://www-users.cse.umn.edu/~kumar00 1/dmbook/ch8.pdf [retrieved on 2021-12-01]

**Beschreibung**

Die Erfindung betrifft ein Verfahren zum Ermitteln von Ausweichtrajektorien für ein kollisionsfreies Ausweichmanöver mehrerer Kraftfahrzeuge. Für jedes Kraftfahrzeug wird eine Schar aus von dem Kraftfahrzeug bei dem Ausweichmanöver nutzbaren Fahrtrajektorien ermittelt und dann für jedes Kraftfahrzeug anhand seiner Schar möglicher Fahrtrajektorien eine Ausweichtrajektorie ermittelt, sodass sich aus der Kombination der ermittelten Ausweichtrajektorien aller Kraftfahrzeuge das kollisionsfreie Ausweichmanöver ergibt. Zu der Erfindung gehören auch eine Steuervorrichtung, mittels welcher das erfindungsgemäße Verfahren durchführbar ist, sowie ein Kraftfahrzeug, dass die erfindungsgemäße Steuervorrichtung aufweist.

Ein Verfahren der beschriebenen Art ist beispielsweise aus der DE 10 2012 005 272 A1 bekannt. Dabei werden bei Erkennen einer bevorstehenden möglichen Kollision zweier Kraftfahrzeuge diese Kraftfahrzeuge dahingehend koordiniert, dass für jedes der Kraftfahrzeuge eine Ausweichtrajektorie ermittelt wird. Mögliche, kollisionsfreie Bewegungshypothese-Trajektorie-Paare aus jeweils einer Fahrtrajektorie jedes der Kraftfahrzeuge werden dahingehend bewertet, ob sie ein potenziell geeignetes kollisionsfreies Bewegungshypothese-Trajektorie-Paar darstellen, das für das Ausweichmanöver genutzt werden kann.

Aus der DE 10 2013 005 362 A1 ist ebenfalls eine Analyse einer Verkehrssituation bekannt, welche für Kraftfahrzeuge das künftige Bewegungsverhalten anhand von Bewegungstrajektorien beschreibt und daraus ermittelt, welches Gefahrenrisiko sich für welche Kombination aus Bewegungstrajektorien ergibt.

Aus der DE 10 2011 106 176 A1 ist ebenfalls bekannt, für Kraftfahrzeuge jeweils eine Schar von möglichen Fahrtrajektorien zu ermitteln und dann paarweise Fahrtrajektorien jedes Kraftfahrzeugs miteinander zu kombinieren, um das sich daraus ergebende Fahrmanöver vorauszusagen und zu bewerten.

Die Ermittlung von Fahrtrajektorien, die von einem Kraftfahrzeug ausgehend von einem aktuellen Fahrzustand zurückgelegt werden können, ist beispielsweise aus einer Veröffentlichung von Düring et al. bekannt (Düring, M. et al., "Adaptive cooperative maneuver planning algorithm for conflict resolution in diverse traffic situations," in: Connected Vehicles and Expo (ICCVE), 2014 International Conference on , pp.242-249, 3-7 Nov. 2014. doi: 10.1109/ICCVE.2014.7297550). Einrichtungen zum Erzeugen einer Schar von möglichen Fahrtrajektorien für ein Kraftfahrzeug sind somit aus dem Stand der Technik bekannt. Die entsprechende Einrichtung wird hier als Trajektoriengenerator beschrieben.

Ein Kraftfahrzeug kann dabei einen Trajektoriengenerator aufweisen, der lediglich für das Kraftfahrzeug selbst die Schar der möglichen Fahrtrajektorien generiert oder der zusätzlich auf der Grundlage von Sensordaten eine jeweilige Schar möglicher Fahrtrajektorien für andere, in der Fahrzeugumgebung befindliche Fremdfahrzeuge erzeugt. Falls ein Trajektoriengenerator eines Kraftfahrzeugs eine Schar möglicher Fahrtrajektorien ermittelt hat, kann diese durch Trajektoriendaten beschrieben werden, die an ein anderes Kraftfahrzeug übermittelt werden können, damit dieses die Schar der möglichen Fahrtrajektorien des Fremdfahrzeugs mit der Schar der eigenen möglichen Fahrtrajektorien vergleichen kann.

Somit sind aus dem Stand der Technik Verfahren bekannt, die Fahrmanöver zwischen mehreren Kraftfahrzeugen zu planen. Damit ist dann eine Konfliktlösung einer kritischen Verkehrssituation mit mehreren Kraftfahrzeugen durch Kombination ihrer Handlungsmöglichkeiten in Form der möglichen Fahrtrajektorien möglich. Das Ziel einer solchen kooperativen Manöverplanung ist eine kollisionsfreie Trajektorienkombination für ein Ausweichmanöver der Kraftfahrzeuge. Wenn eine solche kollisionsfreie Kombination gefunden wurde, wird diese mittels eines Kostenfunktionals oder Optimierungskriteriums bewertet, sodass am Ende eine optimale Lösung gewählt werden kann.

Die Leistungsfähigkeit von Trajektoriengeneratoren kann aber derart groß sein, dass die Schar möglicher Fahrtrajektorien sehr zahlreich ist. Das heißt die Anzahl der beschriebenen Fahrtrajektorien kann derart groß sein, dass eine Überprüfung der sich aus der Kombination aller möglichen Fahrtrajektorien mehrerer Kraftfahrzeuge ergebenden Fahrsituationen nicht innerhalb der vor einer möglichen Kollision zur Verfügung stehenden Zeit durchgeführt werden kann. Somit ist bei einer großen Anzahl möglicher Fahrtrajektorien die echtzeitfähige Berechnung einer kollisionsfreien Lösung eine Herausforderung. Insbesondere weist das zu lösende Kombinationsproblem in Bezug auf die berechneten Fahrzeuge eine exponentielle und in Bezug auf die Anzahl der möglichen Fahrtrajektorien je Kraftfahrzeug polynominelle Komplexität auf. Dadurch wird die Berechnung ab einer gewissen Anzahl von Kraftfahrzeugen beziehungsweise Trajektorien nicht mehr vollständig echtzeitfähig, das heißt innerhalb der wenigen 100 Millisekunden, die bis zu einer prädizierten Kollision noch verbleiben.

Allerdings möchte man auch vermeiden, lediglich einen Teil der möglichen Fahrtrajektorien zu nutzen, indem ein Trajektoriengenerator beispielsweise dahingehend beschränkt wird, dass er nur Ausweichkurse oder Fahrtrajektorien berücksichtigt, bei denen ein Kraftfahrzeug beispielsweise nach links ausweicht. Hierdurch könnten wertvolle Handlungsmöglichkeiten übersehen werden, die zu einer kollisionsfreien Auflösung oder zu einem noch geringeren Schaden, das heißt einem optimaleren Ergebnis des Ausweichmanövers führen können.

In dem Dokument DE 10 2012 005 272 A1 ist beschrieben, dass bei zwei Kraftfahrzeugen, die sich auf Kollisionskurs befinden, für jedes der Kraftfahrzeuge eine Vielzahl von möglichen Trajektorien für ein Ausweichmanöver ermittelt wird und dann die Trajektorien der Kraftfahrzeuge paarweise miteinander daraufhin überprüft werden, ob sich bei Befolgen der Trajektorien eine Kollision ergibt. Es werden all diejenigen Trajektorien überprüft, die auch ursprünglich als mögliche Trajektorien berechnet wurden, d.h. es findet keine Auswahl statt.

Aus der Dissertationsschrift von Hermes, Christoph ("Aktionserkennung und -prädiktion mittels Trajektorienklassifikation - Dissertationsschrift", 30. August 2012, Seiten 1-144) ist bekannt, bei der Beobachtung von Fahrzeugmanövern mittels Sensoren die Vielzahl sich ergebender ähnlicher Trajektorien mittels eines Clusterverfahrens zusammenzufassen, um die aussagekräftigsten Trajektorien-Prototypen zu erhalten, welche möglichst gut die Gesamtmenge repräsentieren. Es werden dann diese Prototypen gespeichert, um sie bei einer Bewegungsprädiktion als mögliche, vorberechnete Bewegungsschemata zugrundezulegen.

Aus der wissenschaftlichen Veröffentlichung von Branicky et al. (Branicky, Knepper, Kuffner, "Path and Trajectory Diversity: Theory and Algorithms", IEEE International Conference on Robotics and Automation, Pasadena, CA, USA, 2008) ist für die Planung einer Bewegung eines Roboters vorgesehen, dass für diesen zunächst eine Vielzahl von möglichen Trajektorien vorberechnet wird und anschließend der so entstandene "Baum" von Trajektorien ausgedünnt ("prune") wird. Das Ergebnis wird dann abgespeichert, um es für eine zukünftige Bewegungsplanung als fest vorgegebenes Muster zu nutzen.

Die Veröffentlichung "Introduction to Data Mining (First Edition), Chapter 8, Cluster Analysis: Basic Concepts and Algorithms" diskutiert grundlegende Konzepte und Algorithmen der Cluster Analysis. Die Cluster-Analyse bietet eine Abstraktion von einzelnen Datenobjekten zu den Clustern an, in denen sich diese Datenobjekte befinden. Darüber hinaus charakterisieren einige Clustertechniken jedes Cluster anhand eines Cluster-Prototyps. Beispielsweise kann ein Datenobjekt repräsentativ für andere Objekte im Cluster sein. Diese Cluster-Prototypen können eine Grundlage für eine Datenanalyse oder für Datenverarbeitungstechniken sein. Beispielsweise kann ein Algorithmus auf einen reduzierten Datensatz angewandt werden.

Der Erfindung liegt die Aufgabe zugrunde, für auf Kollisionskurs befindliche Kraftfahrzeuge innerhalb der noch verbleibenden Zeit bis zum notwendigen, automatisierten Einleiten eines Ausweichmanövers eine möglichst umfangreiche Überprüfung der zur Verfügung stehenden Fahrtrajektorien durchzuführen.

Die Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung sowie die Figuren gegeben.

Durch die Erfindung ist ein Verfahren zum Ermitteln von Ausweichtrajektorien für ein kollisionsfreies Ausweichmanöver von Kraftfahrzeugen bereitgestellt.

Jedem Kraftfahrzeug wird also eine Ausweichtrajektorie zugeordnet, die es fahren soll, damit sich insgesamt für alle Fahrzeuge das kollisionsfreie Ausweichmanöver ergibt. Bei dem Verfahren werden durch eine Steuervorrichtung die folgenden Schritte ausgeführt. Aus zumindest einem Trajektoriengenerator werden für jedes Kraftfahrzeug Trajektoriendaten wahrgenommen oder empfangen, welche eine Schar aus möglichen Fahrtrajektorien des Kraftfahrzeugs beschreiben. Es kann also ein Trajektoriengenerator für alle Kraftfahrzeuge die jeweiligen Trajektoriendaten erzeugen oder die Trajektoriengeneratoren mehrerer der Kraftfahrzeuge oder alle Kraftfahrzeuge übermitteln die jeweiligen eigenen Trajektoriendaten ihres Kraftfahrzeugs an die Steuervorrichtung.

Wie auch schon aus dem Stand der Technik bekannt wird für jedes Kraftfahrzeug anhand seiner Schar möglicher Fahrtrajektorien eine jeweilige Ausweichtrajektorie für das Kraftfahrzeug ermittelt, sodass sich aus der Kombination der ermittelten Ausweichtrajektorien aller Kraftfahrzeuge das kollisionsfreie Ausweichmanöver ergibt.

Um diese gewünschten Ausweichtrajektorien nun innerhalb eines vorgegebenen Zeitintervalls ermitteln zu können, damit also das Ausweichmanöver noch rechtzeitig durchgeführt werden kann, ist erfindungsgemäß folgendes vorgesehen. Ausgehend von der jeweiligen Schar möglicher Fahrtrajektorien jedes Kraftfahrzeugs findet zunächst eine Einteilung der Fahrtrajektorien statt. In diesem Einteilungsschritt werden für jedes Kraftfahrzeug die Fahrtrajektorien seiner Schar in Gruppen eingeteilt. Jede Gruppe umfasst also mehrere der Fahrtrajektorien aus der Schar. Die Gruppen sind insbesondere disjunkt. Jede Gruppe wird dann durch eine einzige jeweilige Gruppentrajektorie repräsentiert. Pro Schar wird eine vorbestimmte Anzahl von Gruppen festgelegt, die Anzahl der Gruppen in Abhängigkeit von einer verbleibenden Zeit bis zur Kollision festgelegt und/oder bis zur geplanten Einleitung des Ausweichmanövers festgelegt. Nun wird für jedes Kraftfahrzeug eine seiner Gruppentrajektorien ausgewählt. Die sich hierdurch ergebende Kombination von Gruppentrajektorien kann dazu benutzt werden, das sich ergebende koordinierte Fahrmanöver der Kraftfahrzeuge nachzustellen oder zu simulieren und daran zu überprüfen, ob sich das gewünschte Ausweichmanöver ergibt. Eine solche Überprüfung für spezielle Gruppentrajektorien wird hier als Kombinationsschritt bezeichnet. Mit anderen Worten wird also in zumindest einem solchen Kombinationsschritt jeweils eine der Gruppentrajektorien jedes der Kraftfahrzeuge ausgewählt und anhand der ausgewählten Gruppentrajektorien ein sich daraus ergebendes koordiniertes Fahrmanöver der Kraftfahrzeuge dahingehend überprüft, ob das Fahrmanöver ein vorbestimmtes Optimierungskriterium erfüllt. Durch Festlegen der Eigenschaften oder Bedingungen des Optimierungskriteriums kann eingestellt werden, was als geeignetes Ausweichmanöver letztendlich für die Vermeidung der Kollision oder zur Minderung beispielsweise der Kollisionsschwere genutzt wird.

Schließlich werden die Gruppentrajektorien eines solchen Kombinationsschritts, in welchem das Optimierungskriterium erfüllt wurde, als die Ausweichtrajektorien verwendet. Folgen also die Kraftfahrzeuge den ausgewählten Ausweichtrajektorien, so ergibt sich das entsprechende koordinierte Ausweichmanöver dahingehend, dass tatsächlich das Optimierungskriterium erfüllt wird. Durch das Optimierungskriterium kann beispielsweise festgelegt werden, dass die Kraftfahrzeuge während des Ausweichmanövers einen vorbestimmten Mindestabstand voneinander und/oder zu einem weiteren, stationären Objekt in der Umgebung nicht unterschreiten sollen.

Durch das Verfahren ergibt sich der Vorteil, dass nicht alle aus der Vielzahl der Handlungsmöglichkeiten tatsächlich überprüft werden müssen, sondern durch die Gruppentrajektorien jeweils mehrere der möglichen Fahrtrajektorien repräsentiert und damit überprüft werden. So kann beispielsweise eine Schar aus mehr als 50, insbesondere mehr als 80 möglichen Fahrtrajektorien durch eine Anzahl von weniger als 20, insbesondere weniger als 10 Gruppentrajektorien repräsentiert sein. Es reicht dann, diese Gruppentrajektorien zu überprüfen, um für alle möglichen Fahrtrajektorien festzustellen, welche davon prinzipiell geeignet sind, also überhaupt nur dahingehend in Frage kommen, dass sie das Optimierungskriterium erfüllen können.

Zu der Erfindung gehörten auch optionale Weiterbildungen, durch deren Merkmale sich zusätzliche Vorteile ergeben.

Um tatsächlich mittels der Ausweichtrajektorien die prädizierte Kollision zu verhindern, sieht eine Weiterbildung vor, mittels der jeweiligen Ausweichtrajektorie in dem jeweiligen Kraftfahrzeug ein Fahrerassistenzsystem des Kraftfahrzeugs zur Durchführung des Ausweichmanövers zu konfigurieren. Mit anderen Worten muss also keiner der Fahrer der Kraftfahrzeuge die gewählte Ausweichtrajektorie tatsächlich nachfahren, sondern dies wird automatisiert durch das jeweilige Fahrerassistenzsystem des Kraftfahrzeugs durchgeführt. Somit ergibt sich eine automatisierte Durchführung des Ausweichmanövers.

Eine Weiterbildung betrifft das Problem, dass die möglichen Ausweichtrajektorien einer Schar quantitativ (also zahlenmäßig) beurteilt werden müssen, um feststellen zu können, wie repräsentativ eine Gruppentrajektorie für einzelne Fahrtrajektorien ist. Diese Weiterbildung sieht vor, dass der Einteilungsschritt zum Einteilen der Fahrtrajektorien einer Schar in Gruppen umfasst, dass zu jeder Fahrtrajektorie der Schar jeweils Ähnlichkeitswerte oder Ähnlichkeitsdaten ermittelt werden. Diese werden anhand eines vorbestimmten Ähnlichkeitsmaßes bezüglich einer jeweiligen Referenztrajektorie ermittelt. Man vergleicht also die Fahrtrajektorien zunächst nicht untereinander, sondern jeweils mit einer Referenztrajektorie, die für das jeweilige Kraftfahrzeug zugrunde gelegt wird. Eine solche Referenztrajektorie kann beispielsweise eine gleichförmige Geradeausfahrt des Kraftfahrzeugs beschreiben. Mit Geradeausfahrt ist hierbei die Fahrt tangential zur Fahrbahnmitte gemeint oder die Geradeausfahrt, wie sie sich bei Beibehaltung der aktuellen Fahrtrichtung des Kraftfahrzeugs ergibt. Die Referenztrajektorie kann auch die Beibehaltung des aktuellen Fahrkurses des Kraftfahrzeugs, beispielsweise eine Kurvenfahrt desselben, beschreiben. Die Ähnlichkeitsdaten geben also zu jeder Fahrtrajektorie an, wie ähnlich sie in Bezug auf die Referenztrajektorie ist. Somit hat man also Daten betreffend einen Unterschied jeder Fahrtrajektorie zur Referenztrajektorie. Diese Weiterbildung weist den Vorteil auf, dass nicht alle Fahrtrajektorien untereinander paarweise verglichen werden müssen, wodurch mit weniger Rechenaufwand eine Bewertung der Fahrtrajektorien möglich ist.

Um solche Ähnlichkeitsdaten zu ermitteln, sieht eine Weiterbildung vor, dass das Ähnlichkeitsmaß umfasst, dass für eine vorbestimmte Anzahl $n$ an Zeitschritten jeweils eine Längsabweichung $\Delta X$ entlang einer Erstreckungsrichtung der Referenztrajektorie und eine Querabweichung $\Delta Y$ entlang einer Richtung quer zur Referenztrajektorie ermittelt wird und dann aus den jeweiligen Abweichungen aller Zeitschritte insgesamt ein Summenwert $K_1$ der Längsabweichung und ein Summenwert $K_2$ der Querabweichung ermittelt wird. Des Weiteren wird zum letzten Zeitschritt oder für den letzten Zeitschritt die resultierende Endabweichung $K_3$ längs und/oder quer ($\Delta Y_n$) zur Referenztrajektorie ermittelt. Eine Abweichung in Längsrichtung ergibt sich beispielsweise durch einen Fahrgeschwindigkeitsunterschied. Eine Querabweichung ergibt sich durch einen unterschiedlichen Lenkwinkel. Somit wird also die Ähnlichkeit jeder Fahrtrajektorie zur Referenztrajektorie anhand des räumlichen Verlaufs der Trajektorien ermittelt, wobei eben drei Kriterien, nämlich die Abweichung in X (längs), die Abweichung in Y (quer) und die Endabweichung, bevorzugt Endabweichung quer, berücksichtigt werden. Damit ergeben sich drei Werte, nämlich die zwei Summenwerte $K_1$, $K_2$ der Längsabweichung und der Querabweichung sowie die Endabweichung $K_3$. Diese Werte definieren dann einen Vektor oder Raumpunkt in einem dreidimensionalen Merkmalsraum. Damit ist ein Vergleich von Fahrtrajektorien untereinander beispielsweise als euklidisches Abstandsmaß möglich. Die Weiterbildung weist somit den Vorteil auf, dass jede Fahrtrajektorie unabhängig von ihrer Komplexität, das heißt des Umfangs der Trajektoriendaten, durch einen einzelnen Punkt im Merkmalsraum repräsentiert wird, der mit anderen Punkten, das heißt anderen Fahrtrajektorien, mit geringem Rechenaufwand und damit in entsprechend kurzer Zeit, verglichen werden kann.

Erfindungsgemäß wird pro Schar eine vorbestimmte Anzahl von Gruppen in Abhängigkeit von einer verbleibenden Zeit bis zur Kollision und/ oder bis zur geplanten Einleitung des Ausweichmanövers festgelegt. Die Anzahl der Gruppen bestimmt indirekt den Zeitaufwand, der zum Prüfen aller Gruppentrajektorien nötig ist. Durch Festlegen der Anzahl ist somit der Zeitaufwand prädizierbar. Ausgehend von den möglichen Fahrtrajektorien, insbesondere ausgehend von der Beschreibung der Fahrtrajektorien als Punkte in Form der Ähnlichkeitsdaten, sieht eine Weiterbildung vor, dass der Einteilungsschritt mittels einer Clusteranalyse durchgeführt wird. Es kann also beispielsweise der k-Means++ Algorithmus genutzt werden, um eine vorbestimmte Anzahl von Gruppen zu ermitteln (David Arthur und Sergei Vassilvitskii. »K-means++: The Advantages of Careful Seeding«, In: Proceedings of the Eighteenth Annual ACM-SIAM Symposium on Discrete Algorithms. SODA '07. New Orleans, Louisiana: Society for Industrial und Applied Mathematics, 2007, S. 1027-1035. ISBN: 978-0-898716-24-5). Beispielsweise kann die Einteilung in vorteilhafter Weise anhand der Ähnlichkeitsdaten beispielsweise im Sinne des euklidischen Maßes oder der euklidischen Metrik vorgenommen werden. Hieraus ergibt sich, dass Fahrtrajektorien, die derselben Gruppe zugeteilt werden, räumlich ähnliche Bereiche der Straße belegen. Somit ergibt sich auf Grundlage einer solchen Clusteranalyse eine gezielte Abtastung des Lösungsraumes, in welchem sich die einzelnen Punkte, welche die Fahrtrajektorien repräsentieren, befinden.

Ist nun jede Gruppe ermittelt, so muss zu jeder Gruppe noch die Gruppentrajektorie ausgewählt werden. Eine Weiterbildung hierzu sieht vor, dass für jedes der Kraftfahrzeuge aus jeder seiner Gruppen als die jeweilige Gruppentrajektorie eine mittige Fahrtrajektorie oder eine zufällige Fahrtrajektorie ausgewählt wird. Die mittige Fahrtrajektorie ist gemäß dieser Weiterbildung das Zentrum, das durch die Clusteranalyse für jedes Cluster angegeben wird. Die mittige Fahrtrajektorie weist den Vorteil auf, dass sie den geringsten mittleren Abstand zu allen durch sie repräsentierten Fahrtrajektorien aufweisen kann. Die zufällige Trajektorie weist den Vorteil auf, dass die Gruppentrajektorie mit geringem Rechenaufwand aus den möglichen Fahrtrajektorien der Gruppe ausgewählt wird.

Eine Weiterbildung ermöglicht es, die Fahrtrajektorien noch genauer aufeinander abzustimmen. Bisher wurde beschrieben, dass die jeweilige Gruppentrajektorie jedes Kraftfahrzeugs, durch welche das Optimierungskriterium erfüllt werden kann, selbst als Ausweichtrajektorie genutzt wird. Allgemein kann aber vorgesehen sein, dass nicht die Gruppentrajektorie selbst, sondern eine der Fahrtrajektorien aus der zugehörigen Gruppe als Ausweichtrajektorien verwendet wird. Die Weiterbildung sieht nämlich vor, dass alle Kombinationsschritte zum Prüfen der Gruppentrajektorien innerhalb eines vorbestimmten Zeitintervalls durchgeführt werden, nämlich des Zeitintervalls, bis zum benötigten Start des Ausweichmanövers. Für den Fall, dass dabei ein solcher Kombinationsschritt, welcher das Optimierungskriterium erfüllt, vor dem Ende des Zeitintervalls gefunden wird, wird zusätzlich zumindest eine Fahrtrajektorie aus derjenigen Gruppe, welche durch die entsprechende Gruppentrajektorie repräsentiert ist, ebenfalls auf das Optimierungskriterium hin überprüft. Anhand der Gruppentrajektorie wird also diejenige Gruppe ermittelt, welche potentiell eine oder mehrere Fahrtrajektorien enthält, mittels welchen das Optimierungskriterium erfüllt werden kann. Innerhalb dieser Gruppe wird dann zumindest eine weitere Fahrtrajektorie zum Durchführen eines jeweiligen Kombinationsschritts genutzt. So kann die noch verbleibende Zeit dazu genutzt werden, das Ausweichmanöver weiter anhand des Optimierungskriteriums zu optimieren. Eine Weiterbildung sieht auch vor, weitere der Gruppen zu überprüfen. Die zuvor beschriebene Nutzung der Zeit entspricht einer Suche nach einem besseren Ergebnis innerhalb der bestehenden Gruppen.

Sie könnte jedoch auch genutzt werden, um mehrere Gruppen weiter zu untersuchen

Das Optimierungskriterium kann hierzu eine oder mehrere der an sich bekannten Bedingungen umfassen. Beispielsweise kann in der beschriebenen Weise der Abstand der Kraftfahrzeuge größer als ein vorbestimmter Mindestabstand gehalten werden oder auch zahlenmäßig maximiert werden. Es kann auch vorgesehen sein, dass eine Längsbeschleunigung und/oder eine Querbeschleunigung für die Kraftfahrzeuge minimiert oder zumindest unterhalb eines jeweiligen Schwellwerts gehalten werden soll. Es kann auch vorgesehen sein, dass das Optimierungskriterium einen absoluten Vergleich aller möglichen Kombinationen vorsieht, das heißt das Optimierungskriterium die Ermittlung des minimalsten Werts oder optimalsten Werts aus allen sich ergebenden Werten (für z.B. Abstand und/oder Beschleunigung) vorsieht, sodass also zunächst alle Gruppentrajektorien miteinander kombiniert werden müssen, um zu überprüfen, durch welchen der Gruppentrajektorien das Optimierungskriterium insgesamt erfüllt ist. Andere geeignete Optimierungskriterien können auch aus dem zitierten Stand der Technik entnommen werden.

Wie bereits ausgeführt, gehört zu der Erfindung auch eine Steuervorrichtung für ein Kraftfahrzeug, mittels welcher das erfindungsgemäße Verfahren durchgeführt werden kann. Die erfindungsgemäße Steuervorrichtung weist eine Empfangseinrichtung zum Empfangen von Trajektoriendaten auf, welche in der beschriebenen Weise jeweils eine Schar aus möglichen Fahrtrajektorien eines Kraftfahrzeugs beschreiben. Des Weiteren weist die Steuervorrichtung eine Rechenvorrichtung auf, die dazu eingerichtet ist, eine Ausführungsform des erfindungsgemäßen Verfahrens durchzuführen. Die Recheneinrichtung kann auf einem oder mehreren Mikrocontroller und/oder einem oder mehreren Mikroprozessoren basieren. Als Empfangseinrichtung kann beispielsweise ein Busanschluss bereitgestellt sein, über welchen die Steuervorrichtung die Trajektoriendaten von einem Trajektoriengenerator empfängt. Die Empfangseinrichtung kann auch beispielsweise einen Funkempfänger zum Empfangen von Trajektoriendaten aus einem anderen Kraftfahrzeug umfassen. Die Empfangseinrichtung kann auch ein Programmmodul sein, welches die Trajektoriendaten von einem Trajektoriengenerator empfängt, der auf derselben Recheneinrichtung wie ein Teil der Steuervorrichtung als Programmmodul realisiert ist.

Zu der Erfindung gehört schließlich auch ein Kraftfahrzeug, welches eine Ausführungsform der erfindungsgemäßen Steuervorrichtung aufweist. Das erfindungsgemäße Kraftfahrzeug ist bevorzugt als Kraftwagen, insbesondere als Personenkraftwagen oder Lastkraftwagen, ausgestaltet.

Im Folgenden ist ein Ausführungsbeispiel der Erfindung beschrieben. Hierzu zeigt:

Fig. 1   eine schematische Darstellung eines Fahrszenarios mit Kraftfahrzeugen, die durch eine Steuervorrichtung in einer Ausführungsform des erfindungsgemäßen Kraftfahrzeugs koordiniert werden;

Fig. 2   eine schematische Darstellung der Kraftfahrzeuge von Fig. 1 mit einer Veranschaulichung möglicher Fahrtrajektorien der Kraftfahrzeuge;

Fig. 3   eine schematische Darstellung der Kraftfahrzeuge von Fig. 1, während sie ein kollisionsfreies Ausweichmanöver durchführen;

Fig. 4   eine schematische Darstellung einer Schar möglicher Fahrtrajektorien die durch Trajektoriendaten eines Kraftfahrzeugs beschrieben sind und in Gruppen eingeteilt werden;

Fig. 5   eine schematische Darstellung der Kraftfahrzeuge in der Fahrsituation von Fig. 1 mit einer Veranschaulichung von Gruppentrajektorien, welche die möglichen Fahrtrajektorien repräsentieren;

Fig. 6   eine Skizze zur Veranschaulichung eines Einteilungsschritts, bei welchem Ähnlichkeitsdaten von Fahrtrajektorien mit einer Referenztrajektorie ermittelt werden.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

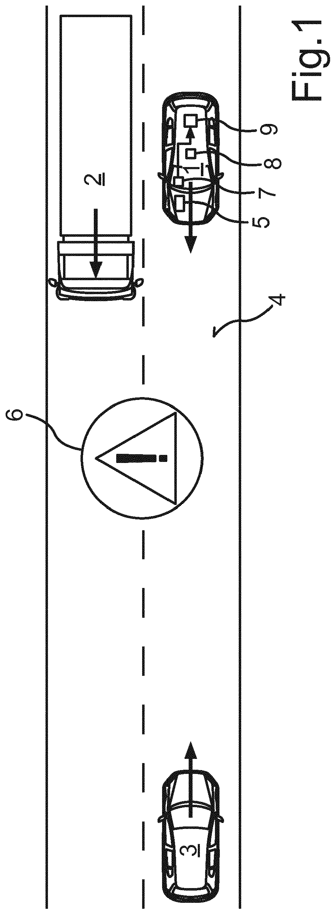

Fig. 1 zeigt beispielhaft drei Kraftfahrzeuge 1, 2, 3, von denen das Kraftfahrzeug 1 das Kraftfahrzeug 2 überholt und hierzu auf einer Gegenfahrspur 4 fährt, auf welchem ihm das Kraftfahrzeug 3 auf einem Kollisionskurs entgegen kommt. Es kann nun beispielsweise durch eine Umgebungsüberwachungseinrichtung 5 des Kraftfahrzeugs 1 eine Kollisionsgefahr 6 erkannt werden, und ein Signal zum Veranlassen von Ausweichmanövern erzeugt werden. In an sich bekannter Weise können dann beispielsweise durch einen Trajektoriengenerator 7 allein oder durch Trajektoriengeneratoren aller Kraftfahrzeuge 1, 2, 3 jeweils Trajektoriendaten 8 erzeugt werden, die beispielsweise an eine Steuervorrichtung 9 des Kraftfahrzeugs 1 ausgesendet oder übermittelt werden können. Falls Trajektoriengeneratoren der Kraftfahrzeuge 2, 3 ebenfalls Trajektoriendaten erzeugen, so können diese beispielsweise über eine Fahrzeugzu-Fahrzeug-Kommunikation beispielsweise auf gemäß einem WiFi-Standard an das Kraftfahrzeug 1 und dort an dessen Steuervorrichtung 9 übermittelt werden.

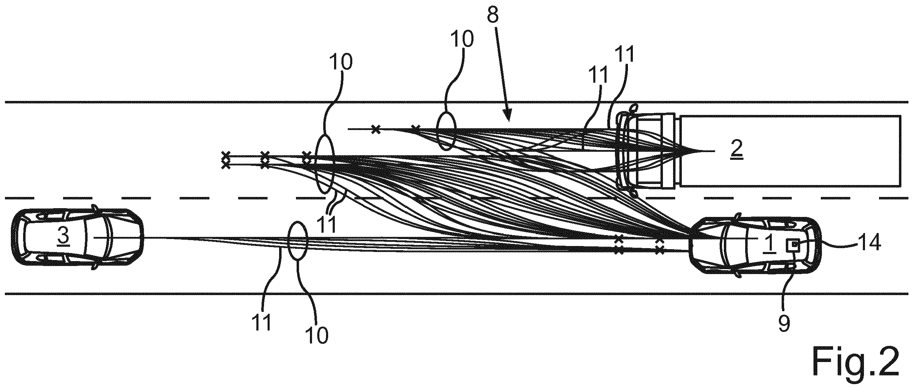

Fig. 2 veranschaulicht, wie durch die Trajektoriendaten 8 für jedes der Kraftfahrzeuge 1, 2, 3 eine Schar 10 möglicher, zukünftiger Fahrtrajektorien 11 jedes Kraftfahrzeugs 1, 2, 3 beschrieben sind. Der Übersichtlichkeit halber sind in Fig. 2 nur einige der Fahrtrajektorien 11 mit einem Bezugszeichen versehen. Die Steuervorrichtung 9 kann nun auf der Grundlage der Fahrtrajektorien 11 jeder Schar 10 für jedes der Kraftfahrzeuge ermitteln, welche Fahrtrajektorie es nachfahren oder benutzen soll, damit alle drei Kraftfahrzeuge 1, 2, 3 kollisionsfrei weiterfahren können.

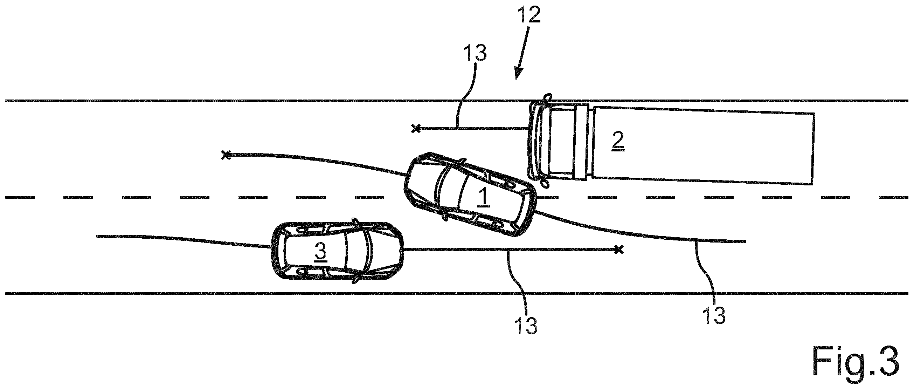

Fig. 3 zeigt ein mögliches, sich ergebendes Ausweichmanöver 12, bei welchem jedes der Kraftfahrzeuge 1, 2, 3 eine Ausweichtrajektorie 13 fährt, sodass sich ein kollisionsfreies Manöver ergibt.

Die Anzahl der möglichen Fahrtrajektorien 11 pro Schar 10 kann derart groß sein, dass es der Steuervorrichtung 9 nicht möglich ist, alle möglichen Kombinationen der Fahrtrajektorie rechtzeitig dahingehend zu überprüfen, ob sie ein optimales Ausweichmanöver 12 im Sinne eines Optimierungskriteriums 14 ergeben, welches für die Auswahl einer der Fahrtrajektorien 11 als Ausweichtrajektorie 13 zugrunde gelegt wird.

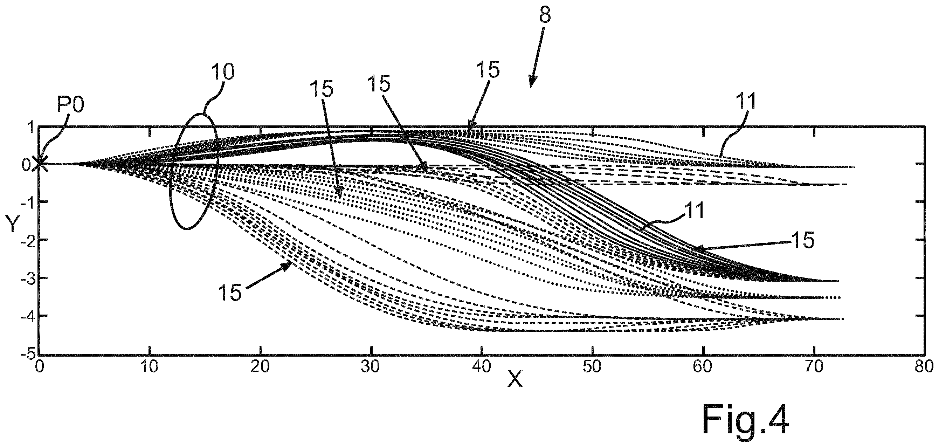

Fig. 4 veranschaulicht hierbei schematisch für die Trajektoriendaten 8 eines einzelnen Kraftfahrzeugs, wie die Schar 10 der Fahrtrajektorien 11 in Gruppen 15 eingeteilt werden kann. Jede Gruppe 15 ist durch eine andere Linienart repräsentiert.

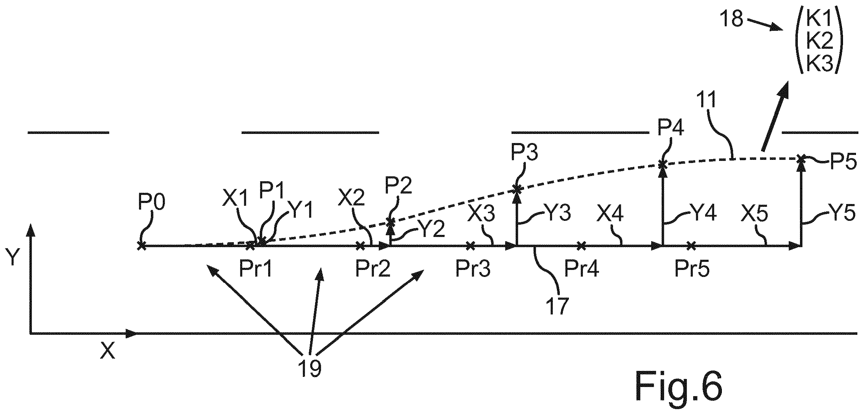

Fig. 4 zeigt hierbei, wie ausgehend von einer aktuellen Ist-Position P0 des Kraftfahrzeugs durch jede Fahrtrajektorie 11 eine Bewegung entlang einer Gradeausfahrtrichtung X und einer Querfahrtrichtung Y gegeben ist. Ähnliche Fahrtrajektorien 11 werden zu jeweils einer der Gruppen 15 zusammengefasst. Das Zusammenfassen ist im weiteren Verlauf der Beschreibung im Zusammenhang mit Fig. 6 erläutert.

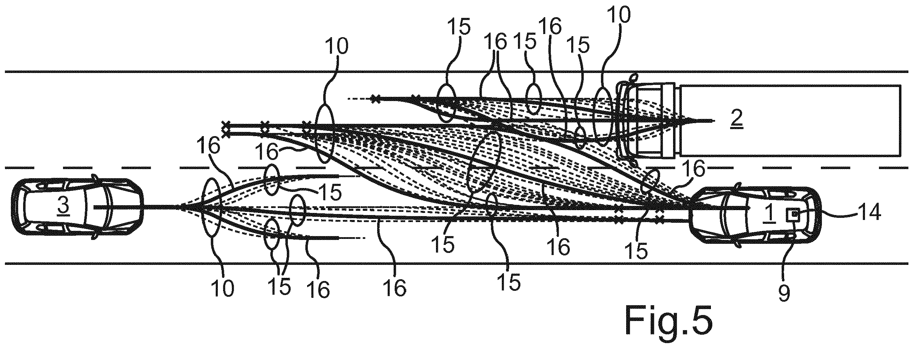

Fig. 5 veranschaulicht, wie ausgehend für jede Gruppe 15 einer Schar 10 eine Gruppentrajektorie 16 ermittelt werden kann, welche jeweils die in der Gruppe 15 enthaltenen Fahrtrajektorien 11 repräsentiert oder ersetzt. Indem jede Gruppe 15 mehrere Fahrtrajektorien 11 umfasst und jede Gruppe 15 aber durch eine einzelne Gruppentrajektorie 16 repräsentiert ist, ergeben sich weniger Gruppentrajektorien 15 als insgesamt durch die Trajektoriendaten 8 beschriebene Fahrtrajektorien 11 vorhanden sind.

Durch die Steuervorrichtung 9 braucht nun lediglich für die Gruppentrajektorien 16 die möglichen Kombinationen dahingehend in einem jeweiligen Kombinationsschritt überprüft werden, welche davon das Optimierungskriterium 14 erfüllt oder am besten erfüllt. Es können dann die zugehörigen Gruppentrajektorien 16 jedes Kraftfahrzeugs 1, 2, 3 als jeweilige Ausweichtrajektorie 13 verwendet werden.

Fig. 6 veranschaulicht, wie zum Ermitteln der Gruppen 15 solche Fahrtrajektorien 11 zusammengefasst werden können, die im Sinne eines Ähnlichkeitsmaßes ähnlich sind. Fig. 6 veranschaulicht hierzu für eine einzelne Fahrtrajektorie 11, wie ausgehend von der Ist-Position P0 die Fahrtrajektorie 11 mit einer Referenztrajektorie 17 verglichen wird und hierdurch ein Kennpunkt oder Kennvektor 18 aus z.B. drei Kennwerten K1, K2, K3 gebildet werden kann, welcher die Fahrtrajektorie 11 in Bezug auf die Referenztrajektorie 17 repräsentiert oder beschreibt. Der Kennvektor 18 stellt Ähnlichkeitsdaten dar. Die Kennwerte K1, K2, K3 stellen ein Ähnlichkeitsmaß dar.

Die Referenztrajektorie 17 ist in dem gezeigten Beispiel die Gradeausfahrt ausgehend von der Ist-Position P0, das heißt entlang der Längsrichtung X ohne Abweichung in Querrichtung Y. Für mehrere Zeitschritte 19, das heißt für Zeiten t1, t2, t3, t4, t5 wird jeweils die sich danach ergebende Position P1, P2, P3, P4, P5 gemäß der Fahrtrajektorie 11 sowie die sich ergebende Position Pr1, Pr2, Pr3, Pr4, Pr5 gemäß der Referenztrajektorie 17 ermittelt. So kann für jeden Zeitschritt 19 jeweils eine Abweichung $\Delta X$ in Längsrichtung (hier bezeichnet als X1, X2, X3, X4, X5) sowie eine Abweichung $\Delta Y$ in Querrichtung (hier bezeichnet als Y1, Y2, Y3, Y4, Y5) ermittelt werden. Die Anzahl der Zeitschritte 19 beträgt hier n, z.B. n=5:

$$K_1 = \frac{1}{n}\sum_{i=1}^{n} \Delta X_i$$

$$K_2 = \frac{1}{n}\sum_{i=1}^{n} |\Delta Y_i|$$

$$K_3 = \Delta Y_n$$

Die beteiligten Größen sind:

$K_1$ ist die Abweichung in X-Richtung,
$K_2$ ist die betragsmäßige Abweichung in Y-Richtung und
$K_3$ ist die Endabweichung in Y-Richtung (hier Y5).

Die Summenwerte $K_1$, $K_2$, $K_3$ können als die Kennwerte K1, K2, K3 verwendet werden. Die sich ergebenden Kennvektoren 18 können dann mittels einer Clusteranalyse in eine vorgegebene Anzahl von Clustern zusammengefasst werden, von denen jedes dann eine der Gruppen 15 ergibt.

Zur Durchführung einer Clusteranalyse wird also jede einzelne Fahrtrajektorie 11 anhand einer Referenztrajektorie 17 hinsichtlich ihres räumlichen Verlaufs bewertet. Die Referenztrajektorie 17 entspricht z.B. einer unbeschleunigten linearen Bewegung. Es können insgesamt z.B. drei Kriterien oder Kennwerte K1, K2, K3 berechnet werden, welche den Verlauf einer Trajektorie 11 charakterisieren. Die Berechnung erfolgt durch eine zeitlich diskrete Abtastung der Trajektorie 11 und der Referenztrajektorie 17 gemäß den n Zeitschritten 19.

Die Clusteranalyse der Trajektorienbewertungen oder Kennvektoren 18 dient dazu, die Gruppen 15 ähnlicher Trajektorien 11 zu finden. Als ähnliche Trajektorien 11 sind im Zusammenhang mit der Manöverplanung Trajektorien 11 gemeint, welche über die gesamte Manöverdauer einen gemeinsamen Bereich der Straße belegen, der sich von den Bereichen der anderen Gruppen unterscheidet.

Das einleitend beschriebene Verfahren von Düring et al. kann zum Bereitstellen weiterer oder anderer Bewertungskriterien für die Clusteranalyse verwendet werden. Ein geeignetes Verfahren für eine Clusteranalyse ist z.B. der k-Means-Algorithmus, insbesondere der k-Means++ Algorithmus. Es handelt sich um ein iteratives Verfahren, welches eine vorbestimmte Anzahl an Clustern (Gruppen) innerhalb einer Menge von mehrdimensionalen-Datenpunkten, hier den Kennvektoren 18, ermitteln kann. Als Distanzmaß kann die euklidische Metrik verwendet werden. Fig. 4 zeigt exemplarisch eine Trajektorienschar 10 mit einzelnen Trajektorien 11, die in die Gruppen 15 eingeteilt wurde.

Auf Grundlage der Gruppentrajektorien 16 kann dann die Trajektorienkombination durchgeführt werden. Das Gesamtproblem der Trajektorienkombination wird somit aus Gründen der Echtzeitfähigkeit in eine Vielzahl von kleineren beherrschbaren Kombinationsproblemen zerlegt. Um möglichst vielversprechende Teilprobleme zu erhalten, wird die Information der vorangegangenen Clusteranalyse genutzt, um gezielt räumlich verschiedene Gruppentrajektorien 16 miteinander zu kombinieren. Fig. 5 illustriert das Prinzip. Aus der Gesamtschar 10 der Trajektorien 11 eines jeden Fahrzeuges 1, 2, 3 werden anhand der Clustereinteilung Trajektorien 11 verschiedener Clusterzugehörigkeit oder Gruppen 15 als Untermenge oder repräsentative Gruppentrajektorie 16 ausgewählt. Die Kombination jeweils einer solcher Gruppentrajektorie 16 je Fahrzeug 1, 2, 3 definiert einen Ausschnitt des Gesamtkombinationsproblems.

Im Falle einer unvollständigen Lösung des Problems wird durch diese Zusammensetzung der Teilprobleme dennoch gewährleistet, dass schnell ein breites Spektrum an Variationsmöglichkeiten auf Kollisionsfreiheit hin überprüft wurde. Der beschriebene Algorithmus zur Suche kollisionsfreier Trajektorienkombinationen mehrerer Kraftfahrzeuge 1, 2, 3 geht somit in mehreren Stufen vor. Zunächst erfolgt für die Trajektorien 11 eines jeden Fahrzeugs 1, 2, 3 eine Ähnlichkeits- oder Clusteranalyse. Zur Durchführung dieser Analyse wird jede einzelne Trajektorie 11 anhand einer Referenztrajektorie 17 (beispielsweise eine Geradeausfahrt) hinsichtlich ihres räumlichen Verlaufs mittels beispielsweise drei Kriterien oder Kennwerten K1, K2, K3 bewertet. Im Anschluss daran erfolgt eine Clusteranalyse aller Trajektorien 11 auf Basis der zuvor ermittelten Bewertungskriterien K1, K2, K3. Das Ergebnis der Clusteranalyse ist eine Einteilung der Trajektorienschar 10 eines Fahrzeugs 1, 2, 3 in Gruppen 15 ähnlicher Trajektorien 11. Die Gruppenzugehörigkeit der Trajektorien 11 wird im sich anschließenden Kombinationsprozess genutzt, um gezielt Trajektorienkombinationen mit möglichst räumlich verschieden verlaufender Gruppentrajektorien 16 auf Kollisionsfreiheit hin zu überprüfen.

Für den Fall, dass die vorhandene Berechnungszeit nicht ausreicht alle vorhandenen Kombinationsmöglichkeiten auf Kollisionsfreiheit hin zu überprüfen und hinsichtlich ihrer Kosten (im Sinne des Optimierungskriteriums 14) zu bewerten, erlaubt dieses samplebasierte heuristisches Verfahren dennoch in einer Vielzahl von Szenarien, in denen es prinzipiell Lösungsmöglichkeiten gibt a) überhaupt eine Lösung zu finden und b) durch das gezielte Testen von räumlich verschieden verlaufender Gruppentrajektorien 16 qualitativ höherwertige Ausweichtrajektorien 13 zu ermitteln. Qualitativ höherwertig bedeutet in diesem Zusammenhang eine Kombination mit einem möglichst geringem Kostenwert gemäß dem Optimierungskriterium 14 zu ermitteln.

Der vorgestellte Ansatz erlaubt es somit, kollisionsfreie Ausweichmanöver 12 aus einer Vielzahl von Handlungsmöglichkeiten bzw. möglichen Trajektorien 11 unter Beachtung von Echtzeitfähigkeitsanforderungen zu ermitteln. Es erfolgt bewusst keine Abstraktion des Handelns, d.h. kein Fahrzeug 1, 2, 3 weist ein vorbestimmtes Verhalten auf und es erfolgt keine Priorisierung von Fahrzeugen. Alle Fahrzeuge werden gleich berechtigt behandelt. Gegenüber egozentrierten und fahrzeugindividuellen Planungsansätzen ist dieser koordinierte Planungsansatz zwischen mehreren Fahrzeugen 1, 2, 3 in der Lage, kritische Verkehrssituationen durch die Abstimmung der Fahrzeuge 1, 2, 3 zuverlässiger zu lösen.

Insgesamt zeigt das Beispiel, wie durch die Erfindung ein echtzeitfähiger Kombinationsalgorithmus zur Bestimmung kollisionsfreier Trajektorien mehrerer Kraftfahrzeuge bereitgestellt werden kann.

## Bezugszeichenliste

| 1 | Kraftfahrzeug |
|---|---|
| 2 | Kraftfahrzeug |
| 3 | Kraftfahrzeug |
| 4 | Gegenfahrspur |
| 5 | Umgebungsüberwachungseinrichtung |
| 6 | Kollisionsgefahr |
| 7 | Trajektoriengenerator |
| 8 | Trajektoriendaten |
| 9 | Steuervorrichtung |
| 10 | Schar |
| 11 | Mögliche Fahrtrajektorie |
| 12 | Ausweichmanöver |
| 13 | Ausweichtrajektorie |
| 14 | Optimierungskriterium |
| 15 | Gruppe |
| 16 | Gruppentrajektorie |
| 17 | Referenztrajektorie |
| 18 | Kennvektor |
| 19 | Zeitschritt |

| K1-K5 | Kennwert |
|---|---|
| P0 | Ist-Position |
| P1-P5 | Position |
| Pr1-Pr5 | Position |
| X | Geradeausfahrrichtung |
| X1-X5 | Abweichung in Längsrichtung |
| Y | Querfahrrichtung |
| Y1-Y5 | Abweichung in Querrichtung |

## Patentansprüche

1.  Verfahren zum Ermitteln von Ausweichtrajektorien (13) für ein kollisionsfreies Ausweichmanöver (12) von Kraftfahrzeugen (1, 2, 3), wobei durch eine Steuervorrichtung (9):

    - aus zumindest einem Trajektoriengenerator (5) für jedes Kraftfahrzeug (1, 2, 3) Trajektoriendaten (8), welche eine Schar (10) aus möglichen Fahrtrajektorien (11) des Kraftfahrzeugs (1, 2, 3) beschreiben, empfangen werden und
    - für jedes Kraftfahrzeug (1, 2, 3) anhand seiner Schar (10) möglicher Fahrtrajektorien (10) eine jeweilige Ausweichtrajektorie (13) ermittelt wird, so dass sich aus der Kombination der ermittelten Ausweichtrajektorien (13) das kollisionsfreie Ausweichmanöver (12) ergibt,
    - in einem Einteilungsschritt für jedes Kraftfahrzeug (1, 2, 3) die Fahrtrajektorien (11) seiner Schar (10) in Gruppen (15) eingeteilt werden, von denen jede mehrere der Fahrtrajektorien (11) umfasst, und jede Gruppe (15) durch eine einzige jeweilige Gruppentrajektorie (16) repräsentiert wird,

- wobei pro Schar (10) eine vorbestimmte Anzahl von Gruppen (15) festgelegt wird, die Anzahl der Gruppen in Abhängigkeit von einer verbleibenden Zeit bis zur Kollision und/oder bis zur geplanten Einleitung des Ausweichmanövers festgelegt wird, und

- in zumindest einem Kombinationsschritt jeweils eine der Gruppentrajektorien (16) jedes der Kraftfahrzeuge (1, 2, 3) ausgewählt wird und anhand der ausgewählten Gruppentrajektorien (16) ein sich daraus ergebendes koordiniertes Fahrmanöver der Kraftfahrzeuge (1, 2, 3) dahingehend überprüft wird, ob das Fahrmanöver ein vorbestimmtes Optimierungskriterium (14) erfüllt, und

- anhand der Gruppentrajektorien (16) eines solchen Kombinationsschritts, in welchem das Optimierungskriterium (14) erfüllt wird, die Ausweichtrajektorien (13) ermittelt werden.

2. Verfahren nach Anspruch 1, wobei mittels der jeweiligen Ausweichtrajektorie (13) in dem jeweiligen Kraftfahrzeug (1, 2, 3) ein Fahrerassistenzsystem des Kraftfahrzeugs (1, 2, 3) zur Durchführung des Ausweichmanövers (12) konfiguriert wird.

3. Verfahren nach einem der vorhergehenden Ansprüche, wobei der Einteilungsschritt umfasst, dass zu jeder Fahrtrajektorie (11) der Schar (19) eines jeweiligen Kraftfahrzeugs (1, 2, 3) jeweils Ähnlichkeitsdaten (18) anhand eines vorbestimmten Ähnlichkeitsmaßes (K1, K2, K3) bezüglich einer jeweiligen Referenztrajektorie (17) ermittelt werden.

4. Verfahren nach Anspruch 3, wobei das Ähnlichkeitsmaß (K1, K2, K3) umfasst, dass für eine vorbestimmte Anzahl an Zeitschritten n (19) jeweils eine Längsabweichung (X1-Xn) entlang einer Erstreckungsrichtung (X) der Referenztrajektorie (17) und eine Querabweichung (Y1-Yn) entlang einer Richtung (Y) quer zur Referenztrajektorie (17) und daraus jeweils ein Summenwert (K1, K2) der Längsabweichung und der Querabweichung sowie eine zum letzten Zeitschritt (19) resultierende Endabweichung (Yn) ermittelt werden.

5. Verfahren nach einem der vorhergehenden Ansprüche, wobei der Einteilungsschritt mittels einer Clusteranalyse durchgeführt wird und für jedes der Kraftfahrzeuge (1, 2, 3) aus jeder der Gruppen (15) als die jeweilige Gruppentrajektorie (16) eine mittige Fahrtrajektorie (11) oder eine zufällige Fahrtrajektorie (11) ausgewählt wird, wobei die mittige Fahrtrajektorie ein Zentrum ist, welches durch die Clusteranalyse für jedes Cluster angegeben wird.

6. Verfahren nach einem der vorhergehenden Ansprüche, wobei der zumindest eine Kombinationsschritt insgesamt innerhalb eines vorbestimmten Zeitintervalls durchgeführt wird und für den Fall, dass ein solcher Kombinationsschritt, welcher das Optimierungskriterium (14) erfüllt, vor dem Ende des Zeitintervalls gefunden wird, zusätzlich zumindest eine Fahrtrajektorie (11) aus derjenigen Gruppe (15), welche durch die entsprechende Gruppentrajektorie (16) repräsentiert ist, ebenfalls auf das Optimierungskriterium (14) hin überprüft wird.

7. Steuervorrichtung (9) für ein Kraftfahrzeug (2), aufweisend eine Empfangseinrichtung zum Empfangen von Trajektoriendaten (8), welche eine Schar (10) aus möglichen Fahrtrajektorien (11) beschreiben, und eine Recheneinrichtung, die dazu eingerichtet ist, ein Verfahren nach einem der vorhergehenden Ansprüche durchzuführen.

8. Kraftfahrzeug (2) mit einer Steuervorrichtung (9) nach Anspruch 7.

**Claims**

1. Method for determining evasion trajectories (13) for a collision-free evasion maneuver (12) by motor vehicles (1, 2, 3), wherein, by means of a control device (9):

- trajectory data (8) which describe a set (10) of possible driving trajectories (11) of the motor vehicle (1, 2, 3) are received from at least one trajectory generator (5) for each motor vehicle (1, 2, 3) and

- a particular evasion trajectory (13) is determined for each motor vehicle (1, 2, 3), on the basis of its set (10) of possible driving trajectories (10) such that the collision-free evasion maneuver (12) results from the combination of the determined evasion trajectories (13),

- in a classification step for each motor vehicle (1, 2, 3), the driving trajectories (11) of its set (10) are classified into groups (15), each of which comprises a plurality of the driving trajectories (11), and each group (15) is represented by a single particular group trajectory (16),

- wherein a predetermined number of groups (15) is determined per set (10), the number of groups is determined on the basis of a remaining time until the collision and/or until the planned initiation of the evasion maneuver, and

- in at least one combination step, one of the group trajectories (16) of each of the motor vehicles (1, 2, 3) is selected in each case and, on the basis of the selected group trajectories (16), a coordinated driving maneuver of the motor vehicles (1, 2, 3) resulting therefrom is checked to determine whether the driving maneuver satisfies a predetermined optimization criterion (14), and

- the evasion trajectories (13) are determined on the basis of the group trajectories (16) of such a combination step in which the optimization criterion (14) is met.

2. Method according to claim 1, wherein a driver assistance system of the motor vehicle (1, 2, 3) is designed to perform the evasion maneuver (12) using the particular evasion trajectory (13) in the particular motor vehicle (1, 2, 3).

3. Method according to either of the preceding claims, wherein, for each driving trajectory (11) of the set (19) of a particular motor vehicle (1, 2, 3), the classification step comprises in each case determining similarity data (18) on the basis of a predetermined similarity degree (K1, K2, K3) with respect to a particular reference trajectory (17).

4. Method according to claim 3, wherein, for a predetermined number of time steps n (19), the similarity degree (K1, K2, K3) comprises in each case determining a longitudinal deviation (X1-Xn) in an extension direction (X) of the reference trajectory (17) and a transverse deviation (Y1-Yn) in a direction (Y) transverse to the reference trajectory (17), and determining therefrom a total value (K1, K2) of the longitudinal deviation and the transverse deviation as well as a final deviation (Yn) resulting at the last time step (19).

5. Method according to any of the preceding claims, wherein the classification step is carried out using a cluster analysis and a central driving trajectory (11) or a random driving trajectory (11) is selected for each of the motor vehicles (1, 2, 3) from each of the groups (15) as the particular group trajectory (16), wherein the central driving trajectory is a center which is specified for each cluster by the cluster analysis.

6. Method according to any of the preceding claims, wherein the at least one combination step is carried out in its entirety within a predetermined time interval and, in the event that such a combination step, which satisfies the optimization criterion (14), is identified before the end of the time interval, additionally at least one driving trajectory (11) from the group (15) represented by the corresponding group trajectory (16) is also checked for the optimization criterion (14).

7. Control device (9) for a motor vehicle (2), comprising a receiving device for receiving trajectory data (8) which describe a set (10) of possible driving trajectories (11), and a computing device which is designed to carry out a method according to any of the preceding claims.

8. Motor vehicle (2) having a control device (9) according to claim 7.

**Revendications**

1. Procédé de détermination de trajectoires d'évitement (13) pour une manoeuvre d'évitement sans collision (12) de véhicules automobiles (1, 2, 3), dans lequel, par un dispositif de commande (9) :

   - des données de trajectoire (8), qui décrivent une famille (10) de trajectoires de déplacement possibles (11) du véhicule automobile (1, 2, 3) sont reçues à partir d'au moins un générateur de trajectoires (5) pour chaque véhicule automobile (1, 2, 3) et
   - pour chaque véhicule automobile (1, 2, 3) à l'aide de sa famille (10) de trajectoires de déplacement possibles (10), une trajectoire d'évitement (13) respective est déterminée, de manière à ce que la manoeuvre d'évitement sans collision (12) résulte de la combinaison des trajectoires d'évitement (13) déterminées,
   - dans une étape de répartition pour chaque véhicule automobile (1, 2, 3), les trajectoires de déplacement (11) de sa famille (10) sont réparties en groupes (15), dont chacun comprend plusieurs des trajectoires de déplacement (11), et chaque groupe (15) est représenté par une trajectoire de groupe (16) respective individuelle,
   - dans lequel par famille (10), un nombre prédéterminé de groupes (15) est défini, le nombre de groupes est défini en fonction d'un temps restant jusqu'à la collision et/ou jusqu'à l'initiation prévue de la manoeuvre d'évitement, et
   - dans au moins une étape de combinaison, respectivement une des trajectoires de groupe (16) de chacun des véhicules automobiles (1, 2, 3) est choisie et à l'aide des trajectoires de groupe (16) choisies, une manoeuvre de déplacement des véhicules automobiles (1, 2, 3) coordonnée en résultant est vérifiée, pour savoir si la manoeuvre de déplacement satisfait un critère d'optimisation prédéterminé (14), et
   - à l'aide des trajectoires de groupe (16) d'une telle étape de combinaison, dans laquelle le critère d'optimisation (14) est satisfait, les trajectoires d'évitement (13) sont déterminées.

2. Procédé selon la revendication 1, dans lequel au moyen de la trajectoire d'évitement (13) respective dans le véhicule automobile (1, 2, 3) respectif, un système d'aide au conducteur du véhicule automobile (1, 2, 3) est configuré pour réaliser la manoeuvre d'évitement (12).

3. Procédé selon l'une quelconque des revendications précédentes, dans lequel l'étape de répartition comprend, que pour chaque trajectoire de déplacement (11) de la famille (19) d'un véhicule automobile (1, 2, 3) respectif, des données de similarité (18) sont respectivement déterminées à l'aide d'une mesure de similarité (K1, K2, K3) prédéterminée par rapport à une trajectoire de référence (17) respective.

4. Procédé selon la revendication 3, dans lequel la mesure de similarité (K1, K2, K3) comprend, que pour un nombre prédéterminé d'étapes temporelles n (19) respectivement un évitement longitudinal (X1-Xn) le long d'une direction d'extension (X) de la trajectoire de référence (17) et un évitement transversal (Y1-Yn) le long d'une direction (Y) transversale à la trajectoire de référence (17) et de ce fait respectivement une valeur de somme (K1, K2) de l'évitement longitudinal et de l'évitement transversal ainsi qu'un évitement final (Yn) résultant à la dernière étape temporelle (19) sont déterminés.

5. Procédé selon l'une quelconque des revendications précédentes, dans lequel l'étape de répartition est réalisée au moyen d'une analyse en grappes et pour chacun des véhicules automobiles (1, 2, 3) à partir de chacun des groupes (15) en tant que trajectoire de groupe (16) respective, une trajectoire de déplacement centrale (11) ou une trajectoire de déplacement aléatoire (11) est choisie, dans lequel la trajectoire de déplacement centrale est un centre, qui est indiqué par l'analyse en grappes pour chaque grappe.

6. Procédé selon l'une quelconque des revendications précédentes, dans lequel l'au moins une étape de combinaison est réalisée en totalité pendant un intervalle de temps prédéterminé et, dans le cas où une telle étape de combinaison, qui satisfait le critère d'optimisation (14), se trouve avant la fin de l'intervalle de temps, en outre, au moins une trajectoire de déplacement (11) du groupe (15), qui est représenté par la trajectoire de groupe (16) correspondante, est également vérifiée concernant le critère d'optimisation (14).

7. Dispositif de commande (9) pour un véhicule automobile (2), présentant un dispositif de réception pour la réception de données de trajectoire (8), qui décrivent une famille (10) de trajectoires de déplacement possibles (11), ainsi qu'un dispositif de calcul, qui est conçu pour réaliser un procédé selon l'une quelconque des revendications précédentes.

8. Véhicule automobile (2) comportant un dispositif de commande (9) selon la revendication 7.

Fig.1

EP 3 414 139 B1

Fig.2

Fig.3

Fig.4

Fig.5

17

Fig.6

EP 3 414 139 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012005272 A1
- DE 102013005362 A1
- DE 102011106176 A1


**In der Beschreibung aufgeführte Nicht-Patentliteratur**

- **DÜRING, M. et al.** Adaptive cooperative maneuver planning algorithm for conflict resolution in diverse traffic situations. *Connected Vehicles and Expo (ICCVE), 2014 International Conference on,* 03. November 2014, 242-249
- **HERMES, CHRISTOPH.** *Aktionserkennung und -prädiktion mittels Trajektorienklassifikation - Dissertationsschrift,* 30. August 2012, 1-144
- **BRANICKY ; KNEPPER ; KUFFNER.** Path and Trajectory Diversity: Theory and Algorithms. *IEEE International Conference on Robotics and Automation, Pasadena, CA, USA,* 2008
- Cluster Analysis: Basic Concepts and Algorithms. Introduction to Data Mining
- K-means++: The Advantages of Careful Seeding. **DAVID ARTHUR ; SERGEI VASSILVITSKII.** Proceedings of the Eighteenth Annual ACM-SIAM Symposium on Discrete Algorithms. SODA '07. Society for Industrial und Applied Mathematics, 2007, 1027-1035